**Europäisches Patentamt**

**European Patent Office**

**Office européen des brevets**

(19)

(11) Numéro de publication : **0 352 181 B1**

(12) **FASCICULE DE BREVET EUROPEEN**

(45) Date de publication du fascicule du brevet :
**11.11.92 Bulletin 92/46**

(51) Int. Cl.⁵ : **B60G 15/12, F16F 9/32**

(21) Numéro de dépôt : **89402035.3**

(22) Date de dépôt : **18.07.89**

(54) **Elément porteur pour suspension hydropneumatique de véhicule automobile.**

(30) Priorité : **22.07.88 FR 8810341**

(43) Date de publication de la demande :
**24.01.90 Bulletin 90/04**

(45) Mention de la délivrance du brevet :
**11.11.92 Bulletin 92/46**

(84) Etats contractants désignés :
**DE GB IT**

(56) Documents cités :
**EP-A- 0 268 785
DE-A- 3 500 601
DE-B- 1 057 891
DE-B- 1 058 855
DE-B- 1 262 078
DE-U- 1 871 882
DE-U- 7 613 092**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Richard, Denis
65, rue Mirabeau
F-94600 Choisy-Le-Roi (FR)**

(74) Mandataire : **Boivin, Claude
9, rue Edouard-Charton
F-78000 Versailles (FR)**

Jouve, 18, rue Saint-Denis, 75001 PARIS

## Description

La présente invention concerne un essieu porteur de véhicule automobile comprenant un cylindre qui est articulé sur un élément solidaire de la structure du véhicule et dans lequel est monté coulissant un piston articulé sur un bras support de roue et délimitant une chambre haute pression en communication avec un accumulateur hydropneumatique.

On connaît des essieux porteurs de ce genre qui intègrent la butée de détente. Mais, dans ces essieux, la butée de détente est emmanchée dans le cylindre, ce qui entraîne une augmentation du diamètre de celui-ci.

On connaît des essieux porteurs dans lesquels l'intègration de la butée de détente n'entraîne aucune augmentation du diamètre du cylindre et qui ont par suite un faible encombrement; mais ces essieux porteurs, tels qu'ils sont actuellement réalisés, risquent de se coincer. La présente invention a pour objet un essieu porteur qui ne présente pas cet inconvénient.

Le document DE-A- 1 262 078 décrit un essieu de ce genre dans lequel les moyens de butée de détente sont logés à l'intérieur du piston et prennent appui sur un épaulement d'une tige axiale traversant l'une des extrémités du piston. Mais dans cet essieu porteur, le cylindre du vérin est fixé par un montage élastique à une partie fixe du véhicule alors que le piston est simplement relié au bras support de roue. Si le vérin était articulé à ses deux extrémités, la tige risquerait de se coincer lorsque la détente serait maximale.

Le document DE-B- 1 057 891 décrit un élément porteur de suspension dans lequel la tige de piston est reliée par une rotule au fond du cylindre. Mais là encore, il n'y a aucun risque de coincement car l'élément porteur n'est articulé à aucune de ses extrémités.

La présente invention a pour objet un élément porteur du type décrit dans le préambule de la revendication 1 et dans lequel tout risque de coincement est évité. Cet élément porteur est caractérisé en ce que la tige axiale comporte, à son extrémité opposée à son épaulement, une chape articulée sur un axe porté par un tenon venu de matière dans le fond du cylindre.

On a décrit ci-après, à titre d'exemple non limitatif, un mode de réalisation de l'élément porteur selon l'invention, avec référence aux dessins annexés dans lesquels :

La Figure 1 est une vue en élévation d'un essieu incorporant cet élément porteur;

La Figure 2 est une vue en coupe axiale de l'élément porteur, le piston étant à mi-course;

La Figure 3 en est une vue en coupe suivant III-III de la Figure 2, le piston étant dans sa position extrême rentrée dans la moitié gauche de la Figure et dans sa position extrême sortie dans la moitié droite.

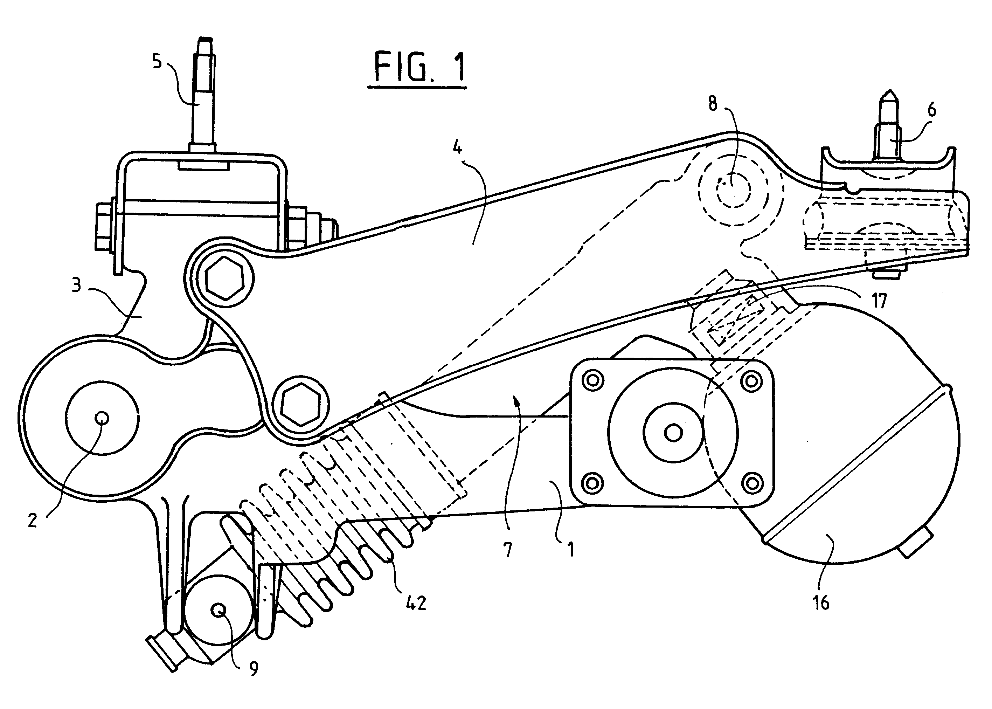

A la Figure 1, on voit un essieu qui comprend de chaque côté un bras 1 monté pivotant en 2 sur un boîtier 3 auquel sont fixés deux longeronnets 4. Deux éléments de fixation 5 et 6 permettent de solidariser avec la structure du véhicule respectivement le boîtier 3 et les longeronnets 4.

Entre les deux longeronnets est disposé un élément porteur désigné dans son ensemble par la référence 7. Cet élément porteur est articulé autour d'un axe 8 sur les longeronnets et autour d'un axe 9 sur le bras 1.

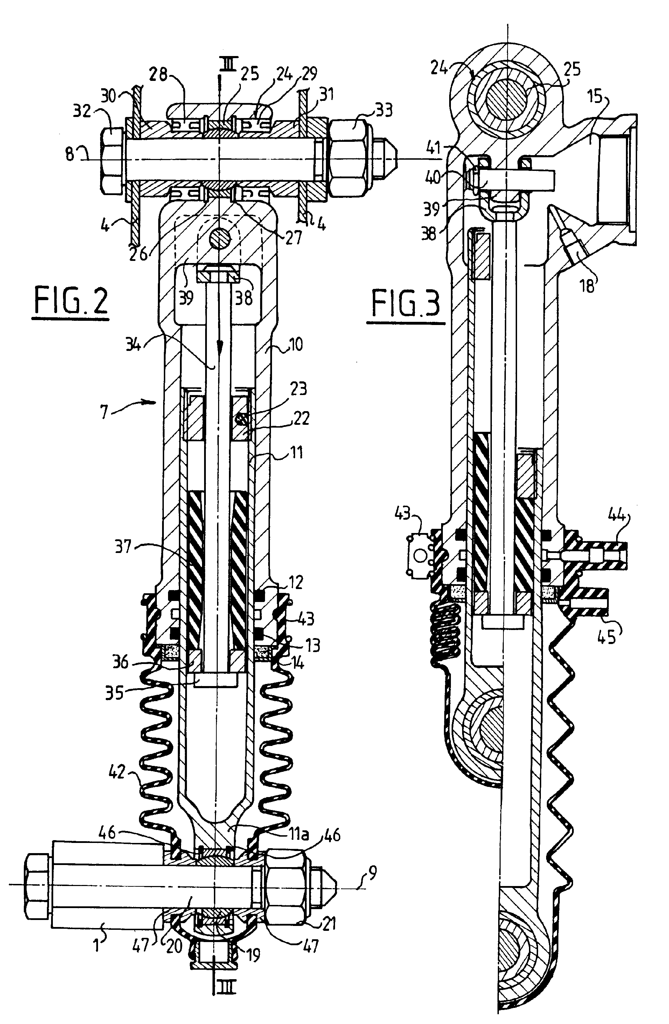

Comme on le voit plus particulièrement aux Figures 2 et 3, l'élément porteur 7 est constitué par un cylindre monobloc 10 en alliage coulé dans lequel est monté coulissant un piston tubulaire 11 en acier extrudé, l'étanchéité étant assurée par deux joints toriques 12 et 13 et un joint en feutre 14; le diamètre extérieur du piston est égal au diamètre intérieur du cylindre, dans toute la partie utile de sa course. La partie supérieure du cylindre présente un orifice latéral 15 le mettant en communication avec un bloc pneumatique 16 dans lequel se trouve un amortisseur 17. Un ambrèvement 18 permet l'arrivée du liquide hydraulique dans le cylindre 10.

La partie inférieure 11a du piston 11 est aplatie à froid et est reliée par une rotule 19 à une vis 20 qui est elle-même fixée au bras 1 par un écrou 21.

Dans la partie supérieure du piston 11 est vissé un bouchon 22 muni d'un frein 23 en matière plastique assurant l'indessérabilité.

La partie supérieure du cylindre 10 présente un alésage 24 dans lequel est disposée une rotule 25 maintenue en place par deux circlips 26 et 27 et maintenue à l'abri de la poussière et des projections d'eau par deux joints à double lèvre 28 et 29. Deux douilles 30 et 31 servent à la fixation du cylindre sur les longeronnets 4 par l'intermédiaire d'une vis 32 et d'un écrou 33.

Une tige 34 est disposée axialement dans le cylindre 10 et traverse le bouchon 22. A son extrémité inférieure, cette tige présente un épaulement 35 sur lequel est placée une rondelle en matière plastique 36 dont le diamètre extérieur est égal au diamètre intérieur du piston 11 et qui sert ainsi de palier pour cette tige. Cette rondelle sert d'appui à une butée de détente 37 en élastomère.

Sur l'extrémité supérieure de la tige 34 est rivée une chape 38 dans laquelle est emboîté un tenon 39 venu de fonderie dans le fond du cylindre. Un axe 40 pouvant être introduit par l'orifice latéral 15 solidarise la chape 38 avec le tenon 39, donc la tige 34 avec le cylindre 10. La tenue en place de cet axe est obtenue par un jonc 41 qui se dilate après introduction.

Un pare-poussière 42 coiffe la partie inférieure du cylindre 10 et est tenu en place par un collier à double serrage 43. Ce pare-poussière comporte une tétine de retour de suintement 44, et une seconde de mise à l'atmosphère 45, que l'on relie à un endroit à l'abri de la poussière de façon à permettre la respiration du pare-poussière sans déformation.

La partie basse du pare-poussière 42 enveloppe totalement la rotule 19 qui est maintenue en place par deux circlips 46, en se plaçant dans des gorges de deux douilles 47 montées sur la vis 20.

La butée de détente 37 étant logée à l'intérieur du piston 11 n'entraîne pas une augmentation du diamètre extérieur du cylindre 10.

**Revendications**

1. Elément porteur pour suspension hydropneumatique d'un véhicule automobile comprenant un cylindre (10) qui est articulé sur un élément (4) solidaire de la structure du véhicule et dans lequel est monté coulissant un piston (11) articulé sur un bras support de roue (1) et délimitant une chambre haute pression en communication avec un accumulateur hydropneumatique (16), et des moyens de butée de détente (37) qui sont logés à l'intérieur du piston (11) et prennent appui sur un épaulement (35-36) d'une tige axiale (34) traversant l'une des extrémités du piston, caractérisé en ce que la tige axiale (34) comporte, à son extrémité opposée à son épaulement (35-36), une chape (38) articulée sur un axe (40) porté par un tenon (39) venu de matière dans le fond du cylindre (10).

2. Elément porteur selon la revendication 1, caractérisé en ce que l'orifice (15) mettant le cylindre (10) en communication avec l'accumulateur hydropneumatique (16) est disposé en regard du tenon (39), ce qui permet le montage de l'axe (40) par cet orifice.

**Patentansprüche**

1. Tragendes Element für die hydropneumatische Radaufhängung eines Kraftfahrzeuges, bestehend aus einem Zylinder (10), der gelenkig an einem Element (4) befestigt ist, das fest mit dem Rahmen des Fahrzeugs verbunden ist und in dem beweglich ein Kolben (11) eingebaut ist, der gelenkig mit einem das Rad tragenden Arm (1) verbunden ist und eine Hochdruckkammer begrenzt, die mit einem hydropneumatischen Druckspeicher (16) verbunden ist, sowie aus einem Rückfederanschlag (37) im Inneren des Kolbens (11), der auf einem Absatz (35, 36) einer in Achsrichtung angebrachten Stange (34) aufliegt, die eines der Enden des Kolbens durchquert, **dadurch gekennzeichnet, daß** die in Achsrichtung angebrachten Stange (34) an ihrem dem Absatz (35, 36) gegenüberliegenden Ende ein Gabelgelenk (38) besitzt, die gelenkig auf einer von einem am Boden des Zylinders (10) angegossenen Zapfen (39) gehaltenen Achse (40) befestigt ist.

2. Tragendes Element nach Patentanspruch 1, dadurch gekennzeichnet, daß die Öffnung (15) zur Verbindung des Zylinders (10) mit dem hydropneumatischen Druckspeicher (16) so gegenüber dem Zapfen (39) angebracht ist, daß der Einbau der Achse (40) durch diese Öffnung möglich ist.

**Claims**

1. Supporting element for the hydropneumatic suspension of motor vehicle including a cylinder (10) joined to an element (4) integral with the structure of the vehicle and inside which a piston (11) is sliding-mounted and joibned to a wheel support arm (1) and delimiting a high-pressure chamber communicating with a hydropneumatic accumulator (16), and pressure-reducing means (37) housed inside the piston and taking support on a shoulder (35 - 36) of an axial rod (34) traversing one of the extremities of the piston, wherein the axial rod (34) comprises, at its extremity opposite its shoulder (35-36), a yoke (38) joined to a spindle (40) borne by a tenon (39) integral with the bottom of the cylinder (10).

2. Supporting element according to claim 1, wherein the orifice placing the cylinder in communication with the hydropneumatic accumulator (16) is disposed opposite the tenon (39), which allows for mounting of the spindle (40) by means of this orifice.

FIG. 1

FIG.2

FIG.3